# EUROPÄISCHE PATENTSCHRIFT

(11) **EP 4 324 066 B1**
(45) Veröffentlichungstag und Bekanntmachung des Hinweises auf die Patenterteilung: **26.03.2025**
(21) Anmeldenummer: 22726020.5
(22) Anmeldetag: 27.04.2022
(51) Int. Cl.: H02J 7/00

(54) **ENERGIEVERSORGUNGSSYSTEM UND VERFAHREN ZUM LADEN EINES ENERGIEVERSORGUNGSSYSTEMS**
POWER SUPPLY SYSTEM AND METHOD FOR CHARGING A POWER SUPPLY SYSTEM
SYSTÈME D'ALIMENTATION EN ÉNERGIE ET PROCÉDÉ DE CHARGE D'UN SYSTÈME D'ALIMENTATION EN ÉNERGIE

(30) Priorität: 06.05.2021 DE 102021111864
(43) Veröffentlichungstag der Anmeldung: 21.02.2024
(73) Patentinhaber: Instagrid GmbH, 71636 Ludwigsburg (DE)
(72) Erfinder: BERNING, Sebastian, 70597 Stuttgart (DE); GANTENBEIN, Jakob, 71638 Stuttgart (DE)
(74) Vertreter: Patentanwälte Bauer Vorberg Kayser
(86) Internationale Anmeldenummer: PCT/EP2022/061163
(87) Internationale Veröffentlichungsnummer: WO 2022/233668

(56) Entgegenhaltungen:
- EP-B1- 3 014 725
- US-B2- 7 589 499

## Beschreibung

Die Erfindung betrifft ein Energieversorgungssystem und ein Verfahren zum Laden eines Energieversorgungssystems.

Zur mobilen Versorgung von leistungsfähigen Maschinen und Fahrzeugen, insbesondere mit einer Ausgangsleistung über 1kW, kommen heutzutage überwiegend Verbrennungsmotoren zum Einsatz. Zur Reduktion von Umwelt- und Gesundheitsbelastung durch Abgase und Lärm werden solche Energieversorgungssysteme zunehmend durch solche auf der Basis von Batteriespeichern ersetzt.

Für viele Anwendungen ist es dabei vorteilhaft, wenn ein solches Energieversorgungssystem eine Wechselspannung bereitstellen kann. Als Beispiel seien Verbraucher angeführt, die zum Betrieb an einer üblichen Netz-Wechselspannung geeignet sind oder Elektromotoren wie beispielsweise 3-phasige Asynchronmaschinen. Des Weiteren ist es für leistungsstarke Verbraucher wünschenswert, eine möglichst hohe Versorgungsspannung bereitzustellen, um erforderliche Betriebsströme und somit auch elektrische Verluste kleinzuhalten.

Um aus der Gleichspannung eines Batteriespeichers eine solche Wechselspannung zu erzeugen, wird ein elektrischer Umrichter benötigt. Hier kommen heute fast ausschließlich sogenannte Zwei- oder Dreipunktwechselrichter zum Einsatz, die aus einer Zwischenkreisspannung (Batteriespannung) mittels Zerhackens und Glättens eine 1- oder 3-Phasige, sinusförmige Ausgangsspannung erzeugen.

Die Druckschrift US 3867643 A beschreibt einen alternativen elektrischen Umrichter, bei dem eine mehrstufige Umrichtung erfolgt. Dabei wird eine Vielzahl von Gleichstromquellen, zum Beispiel Batterien, jeweils durch eine Brückenschaltung periodisch entweder in Serie in den Strompfad geschaltet oder überbrückt, sodass eine sich ergebende Ausgangsspannung einen annähernd sinusförmigen Verlauf annimmt. Die Druckschrift US 5642275 A führt die Implementierung dieser Umrichtertechnik mit Batteriemodulen aus, wobei jedes Batteriemodul mindestens eine Gleichstromquelle und eine Brückenschaltung aufweist. Solche Umrichter werden in der Literatur häufig als "cascaded multilevel inverter/converter" oder "modular multilevel inverter/converter" bezeichnet. Umrichter dieser Art haben sich gegenüber Zwei- bzw. Dreipunkt-Umrichtern als vorteilhaft herausgestellt, insbesondere im Hinblick auf Kosten, thermische Verluste und Baugröße.

EP 3 014 725 B1 beschreibt ein ähnliches System mit einem Batteriedirektumrichter. Da ein Batteriedirektumrichter nicht als Gleichspannungsquelle, beispielsweise zur Versorgung eines Bordnetzes eines Fahrzeugs, zur Verfügung steht, ist eine Modulabgriffschaltung vorgesehen, die selektiv einen Teil der Energiespeichermodule an einen Gleichspannungsabnehmer abführt. Diese Schaltung kann auch zum Laden der Energiespeichermodule genutzt werden.

Eine maximale Ladespannung, die von einem Energieversorgungssystem mit einem entsprechenden Aufbau bezogen werden kann, ist unter anderem von der Anzahl sowie der Dimensionierung der Batteriemodule abhängig. Eine Überspannung kann zur Beschädigung der Batteriemodule führen.

US 7 589 499 B2 offenbart eine Schutzschaltung zum Schutz einer wieder- aufladbaren Batterie vor Überspannungstransienten, insbesondere bei tragbaren Elektronikgeräten, wie Laptops, PDAs oder Smartphones.

Der Erfindung liegt die Aufgabe zu Grunde, ein Energieversorgungssystem mit einem "cascaded multilevel inverter/converter" bereitzustellen, das an einem Versorgungsnetz geladen werden kann, das einen Wechselstrom mit einer Scheitelspannung bereitstellt, die für Batteriemodule des Energieversorgungssystems zu hoch ist. Der Erfindung liegt ferner die Aufgabe zu Grunde, ein Verfahren zum Laden eines Energieversorgungssystems mit einem "cascaded multilevel inverter/converter" bereitzustellen, das es erlaubt, das Energieversorgungssystem an einem Versorgungsnetz zu laden, das einen Wechselstrom mit einer Scheitelspannung bereitstellt, die für Batteriemodule des Energieversorgungssystems zu hoch ist.

Die Aufgaben werden gelöst durch Angabe des Energieversorgungssystems nach Anspruch 1 und des Verfahrens zum Laden eines Energieversorgungssystems nach Anspruch 13. Die Unteransprüche betreffen verschiedene voneinander unabhängige, vorteilhafte Weiterbildungen der vorliegenden Erfindung, deren Merkmale vom Fachmann im Rahmen des technisch Sinnvollen frei miteinander kombiniert werden können, insbesondere auch über die unterschiedlichen Anspruchskategorien hinweg.

Ein erster Aspekt der Erfindung betrifft ein Energieversorgungssystem mit einer Vielzahl von Batteriemodulen, wobei jedes Batteriemodul einen ersten elektrischen Anschluss und einen zweiten elektrischen Anschluss aufweist, über welche die Batteriemodule in einem Verschaltungszweig des Energieversorgungssystems in Serie angeordnet sind, wobei jedes Batteriemodul ferner einen Akkumulator aufweist, der über eine Brückenschaltung des Batteriemoduls mit dem ersten elektrischen Anschluss und dem zweiten elektrischen Anschluss verschaltbar ist, wobei das Energieversorgungssystem einen zu den Batteriemodulen in Serie angeordneten Schalter aufweist, der temporär in einen Sperrzustand versetzt werden kann, sodass bei einem Ladevorgang des Energieversorgungssystems mit einer Wechselspannung durch eine externe Energiequelle eine Belastungsspannung in dem Verschaltungszweig eine maximal zulässige Ladespannung nicht überschreitet.

Wenn das Energieversorgungssystem somit mit einer Spannung beaufschlagt wird, welche die maximal zulässige Ladespannung überschreitet, dann wird der Schalter in den Sperrzustand versetzt. Es wird folglich verhindert, dass die Batteriemodule mit einer Spannung beaufschlagt werden, für die sie eventuell nicht ausgelegt sind. Bei der Brückenschaltung kann es sich grundsätzlich um eine Brückenschaltung beliebiger Art handeln. Mit Hilfe der Brückenschaltung ist es bevorzugt möglich, den Akkumulator auf unterschiedliche Weise mit dem Verschaltungszweig zu verschalten. So ist es erfindungsgemäß vorgesehen, das Batteriemodul mit unterschiedlichen Polaritäten zu verschalten, oder dass das Batteriemodul mittels der Brückenschaltung überbrückt wird. Durch eine geeignete Ansteuerung der Brückenschaltungen kann das Energieversorgungssystem eine Wechselspannung bereitstellen. Bei der maximal zulässigen Ladespannung kann es sich gemäß einer Variante der Erfindung um einen vordefinierten festen Spannungswert handeln, es ist aber alternativ möglich, dass es sich dabei um einen veränderlichen Wert handelt, der während des Betriebs des Energieversorgungssystems laufend angepasst wird. Beispielsweise kann die maximal zulässige Ladespannung von Ladezuständen der Akkumulatoren in den Batteriemodulen abhängig sein. Zu diesem Zweck können die Batteriemodule erfindungsgemäß Spannungsmessgeräte aufweisen, die Ladezustände der Akkumulatoren überwachen können. Das Energieversorgungssystem ist bevorzugt recht kompakt dimensioniert. Somit handelt es sich vorzugsweise um ein tragbares/mobiles Energieversorgungssystem, das beispielsweise auf Baustellen variabel eingesetzt werden kann, um elektrische Energie bereitzustellen.

Es ist erfindungsgemäß möglich, dass das Energieversorgungssystem eine Steuereinheit aufweist, die dazu eingerichtet ist, den Schalter in den Sperrzustand zu versetzen, sobald die Belastungsspannung die maximal zulässige Ladespannung überschreitet. Die Steuereinheit kann mit mindestens einem Spannungsmessgerät, mit mindestens einem Strommessgerät und/oder weiteren Sensoren gekoppelt sein. Auf Grundlage einer gemessenen Spannung und optional auf Grundlage weiterer Werte kann die Steuereinheit entscheiden, ob der Schalter in den Sperrzustand zu versetzen ist. Die Steuereinheit kann erfindungsgemäß auch dazu dienen, um die Brückenschaltungen der Batteriemodule und/oder sonstige Komponenten des Energieversorgungssystems anzusteuern.

Es ist vorteilhaft, wenn die Steuereinheit dazu eingerichtet ist, bei dem Ladevorgang den Schalter aus dem Sperrzustand in einen nichtsperrenden Zustand zu versetzen, sobald der Verschaltungszweig mit einer Spannung beaufschlagt wird, die so groß ist, dass die Belastungsspannung nach Versetzung des Schalters in den nichtsperrenden Zustand geringer ist als die maximal zulässige Ladespannung des Energieversorgungssystems. Das Energieversorgungssystem kann erfindungsgemäß mit einer Wechselspannung geladen werden. Eine bereitgestellte Spannung wird in der Regel sinusförmig ansteigen und wieder abfallen. Die bereitgestellte Spannung steigt nach Überschreiten der maximalen Ladespannung in der Regel weiter an, erreicht dann einen Scheitelpunkt und fällt wieder ab. Zu einem gewissen Zeitpunkt ist die Spannung wieder so gering, dass nach Versetzung des Schalters in den nichtsperrenden Zustand an den Batteriemodulen eine Belastungsspannung anliegen würde, die niedriger ist als die maximal zulässige Ladespannung des Energieversorgungssystems. Zu diesem Zeitpunkt wird der Schalter wieder in den nichtsperrenden Zustand versetzt, sodass die Batteriemodule wieder mit Spannung versorgt werden und die Akkumulatoren in den Batteriemodulen aufgeladen werden. Die Spannung in dem Verschaltungszweig, die zu diesem Zweck gemessen werden kann, kann beispielsweise eine Spannung sein, die über die Batteriemodule sowie den Schalter gemessen wird. Diese Spannung oder aber auch ein sonstiger Messwert kann aber alternativ auch an anderer Stelle im Verschaltungszweig oder an anderen Stellen im Energieversorgungssystem gemessen werden, um daraus abzuleiten, ob die Belastungsspannung nach Versetzung des Schalters in den nichtsperrenden Zustand tatsächlich geringer wäre als die maximal zulässige Ladespannung.

Erfindungsgemäß ist die Belastungsspannung eine an den Batteriemodulen in dem Verschaltungszweig anliegende Spannung oder ein Betrag der an den Batteriemodulen in dem Verschaltungszweig anliegenden Spannung. Die Belastungsspannung ist demgemäß eine Spannung, mit der die Batteriemodule in dem Verschaltungskreis in Summe beaufschlagt sind. Die Belastungsspannung wird bevorzugt mit Hilfe eines Spannungsmessgeräts ermittelt, das in dem Verschaltungskreis eine Spannung über sowohl die Batteriemodule als auch den Schalter misst. Eine an dem Schalter abfallende Spannung kann in geeigneter Weise berücksichtigt werden, um die tatsächliche Belastungsspannung an den Batteriemodulen zu berechnen. Beispielsweise kann eine üblicherweise an dem Schalter abfallende Spannung von einer gemessenen Spannung subtrahiert werden, um die Belastungsspannung zu erhalten. Falls die an dem Schalter abfallende Spannung sehr gering ist, kann diese gemäß Ausführungsformen der Erfindung bei der Bestimmung der Belastungsspannung auch vollkommen vernachlässigt werden. Ein Spannungsmessgerät kann erfindungsgemäß den Batteriemodulen und dem Schalter unmittelbar vorgeschaltet sein. Es ist aber auch möglich, dass das Energieversorgungssystem Mittel zur Messung einer Spannung und/oder eines Stroms an anderer Stelle in dem Energieversorgungssystem aufweist, und dazu eingerichtet ist, daraus die Belastungsspannung abzuleiten. Es versteht sich, dass es sich bei der Belastungsspannung um einen Betrag einer Spannung, die an den Batteriemodulen anliegt, handeln kann. Somit ist es unerheblich, ob die Batteriemodule mit einer positiven oder einer negativen Spannung eines gewissen Betrags beaufschlagt werden.

Der Schalter ist vorzugsweise so ausgelegt, dass er mindestens eine Spannung in Höhe einer Differenz zwischen einer erwarteten maximalen Belastungsspannung in dem Verschaltungszweig und einer minimalen maximal zulässigen Ladespannung sperren kann. Die maximal zulässige Ladespannung kann von Ladezuständen der Akkumulatoren in den Batteriemodulen abhängig sein, also während des Betriebs veränderlich sein, weshalb vorliegend die minimale maximale Ladespannung heranzuziehen ist. Die Batteriemodule können mit höchstens der minimalen maximalen Ladespannung geladen werden, wenn ihre Modulspannungen jeweils einen minimalen erwarteten Wert annehmen. Bei der minimalen maximalen Ladespannung ergibt sich eine größtmögliche Spannungsdifferenz, die durch den Schalter zu blockieren ist. Wenn beispielsweise erwartet wird, dass ein Energieversorgungssystem an ein Energieversorgungsnetz mit einer maximalen Scheitelspannung von V₁ angeschlossen werden könnte, das Energieversorgungssystem aber nur für eine minimale maximal zulässige Ladespannung V₂ ausgelegt ist, die kleiner ist als V₁, dann muss der Schalter dazu in der Lage sein, eine Spannung in der Höhe von V₁ - V₂ zu sperren. Es ist noch besser, wenn der Schalter so ausgelegt ist, dass er mindestens eine erwartete maximale Belastungsspannung in dem Verschaltungszweig sperren kann. Wird zum Beispiel erwartet, dass das Energieversorgungssystem an ein Versorgungsnetz mit einer Scheitelspannung V₃ angeschlossen werden könnte, dann sollte der Schalter bevorzugt dazu geeignet sein, die Spannung V₃ vollständig zu sperren.

Es ist vorteilhaft, wenn das Energieversorgungssystem ein zu dem Schalter eingangsseitig angeordnetes Spannungsmessgerät zur Messung der Belastungsspannung aufweist. Das Spannungsmessgerät ist bevorzugt mit der vorhergehend beschriebenen Steuereinheit gekoppelt und zur Messung der Scheitelspannung vorgesehen. Das Spannungsmessgerät kann unmittelbar in dem Verschaltungszweig angeordnet sein, oder aber auch dem Schalter weiter vorgelagert innerhalb des Energieversorgungssystems.

Es ist erfindungsgemäß möglich, dass der Schalter so ausgebildet ist, dass er in dem Sperrzustand einen Stromfluss unidirektional sperrt. Alternativ kann aber auch vorgesehen sein, dass der Schalter so ausgebildet ist, dass er in dem Sperrzustand einen Stromfluss bidirektional sperrt. Die Wahl eines geeigneten Schalters bestimmt sich insbesondere nach dem vorgesehenen Lademodus sowie einer erwarteten Scheitelspannung, mit der das Energieversorgungssystem bei einem Ladevorgang beaufschlagt werden könnte.

Es ist bevorzugt, wenn das Energieversorgungssystem eine zu dem Schalter eingangsseitig angeordnete Gleichrichterbrücke aufweist. Die Gleichrichterbrücke stellt sicher, dass ein Stromfluss nur in eine Richtung erfolgen kann. Somit kann auf einen bidirektional sperrenden Schalter verzichtet werden. Es ist also besonders bevorzugt, wenn das Energieversorgungssystem einen unidirektional sperrenden Schalter aufweist, und diesem die Gleichrichterbrücke eingangsseitig vorgeschaltet ist.

Es ist erfindungsgemäß möglich, dass der Schalter ein Transistor ist. Bei dem Transistor kann es sich beispielsweise um einen MOSFET (Metall-Oxid-Halbleiter-Feldeffekttransistor) oder um einen IGBT (Bipolartransistor mit isolierter Gate-Elektrode) handeln. Alternativ kann der Schalter aber auch als ein TRIAC (Zweirichtungs-Thyristortriode) oder ein SCR (gesteuerter Silizium-Gleichrichter) ausgeführt sein. Der Schalter kann aber auch als ein Schaltmodul sonstiger Art ausgeführt sein.

Gemäß einer vorteilhaften Ausführungsform der Erfindung ist der Schalter in dem Verschaltungszweig vor einem ersten Batteriemodul der Batteriemodule oder hinter einem letzten Batteriemodul der Batteriemodule angeordnet. Der Schalter ist also insbesondere nicht zwischen zwei Batteriemodulen angeordnet. Es ist erfindungsgemäß ferner möglich, dass der Verschaltungszweig einen Widerstand aufweist, der zu dem Schalter parallelgeschaltet ist. Wenn der Schalter geschlossen wird, könnte sich ansonsten aufgrund induktiver Effekte eine Überspannung an dem Schalter aufbauen. Der parallelgeschaltete Widerstand wirkt dem entgegen, denn über diesen kann ein Strom abfließen.

Es ist bevorzugt, wenn das Energieversorgungssystem dazu eingerichtet ist, elektrische Energie, die durch die externe Energiequelle dem Energieversorgungssystem bereitgestellt wird, auf Vorhandensein mindestens eines Fehlercharakteristikums zu prüfen, und sich bei Detektion des Fehlercharakteristikums abzuschalten. Durch die Überwachung geeigneter Parameter können Fehlerzustände vermieden werden, zum Beispiel ein ungewolltes Rückspeisen elektrischer Energie in ein Versorgungsnetz. Es ist besonders bevorzugt, wenn das Fehlercharakteristikum ausgewählt ist aus der Gruppe umfassend ein Vorhandensein eines Überstroms, ein Vorhandensein einer Überspannung, ein Vorhandensein einer Unterspannung, eine Unterbrechung einer Verbindung zu einer externen Energiequelle aufgrund eines Abzugs eines Steckers, ein Überschreiten einer Anstiegsgeschwindigkeit einer Spannung, ein Überschreiten einer Abfallgeschwindigkeit einer Spannung und ein Über- oder ein Unterschreiten einer Spannungsfrequenz.

Es ist vorteilhaft, wenn die Brückenschaltung eine Vollbrücke ist. Diese ermöglicht eine größtmögliche Flexibilität bei der Verschaltung des Akkumulators mit dem Verschaltungszweig. Es ist alternativ jedoch auch möglich, dass die Brückenschaltung eine Halbbrücke ist oder einen anderweitigen Aufbau aufweist.

Gemäß einer bevorzugten Ausführungsform der Erfindung weist das Energieversorgungsystem ein Schaltmittel auf, an das der Verschaltungszweig angeschlossen ist, wobei das Energieversorgungssystem ferner einen Ladepfad und einen Entladepfad aufweist, die an das Schaltmittel angeschlossen sind und zwischen denen das Schaltmittel umschalten kann, und wobei der Schalter in dem Ladepfad angeordnet ist. Über den Ladepfad kann dem Energieversorgungssystem elektrische Energie zugeführt werden, um die Akkumulatoren aufzuladen. Über den Entladepfad kann das Energieversorgungssystem einem Verbraucher elektrische Energie bereitstellen. Mit Hilfe des Schaltmittels kann auf einfache Weise entweder der Ladepfad oder der Entladepfad mit dem Verschaltungszweig elektrisch leitfähig verbunden werden. Das Schaltmittel weist bevorzugt ein oder mehrere Relais auf. In dem Ladepfad kann bevorzugt auch die vorangehend beschriebene Gleichrichterbrücke angeordnet sein. Ferner ist es vorteilhaft, wenn das vorangehend beschriebene Spannungsmessgerät in dem Ladepfad angeordnet ist.

Es ist erfindungsgemäß ferner möglich, dass das Energieversorgungssystem dazu eingerichtet ist, den Schalter vor einem Versetzen in den Sperrzustand stromlos zu stellen, indem die Brückenschaltungen dazu geeignete Schaltzustände einnehmen. Auf diese Weise kann eine Überlastung des Schalters vermieden werden, wenn dieser plötzlich in den Sperrzustand versetzt werden soll. Um sicherzustellen, dass der Schalter tatsächlich stromlos ist, kann erfindungsgemäß in dem Verschaltungszweig ein Strommessgerät angeordnet sein. Dabei kann erfindungsgemäß das Versetzen des Schalters in den Sperrzustand so lange verzögert werden, bis der Schalter tatsächlich stromlos gestellt ist. Vorzugsweise ist das Energieversorgungssystem dazu eingerichtet, einen Strom, mit dem der Schalter während und unmittelbar nach einem Versetzen des Schalters in einen nichtsperrenden Zustand beaufschlagt wird, kontinuierlich von einem Nullniveau auf ein Betriebsniveau anzuheben, indem die Brückenschaltungen dazu geeignete Schaltzustände annehmen. Somit wird verhindert, dass der Strom zu schnell ansteigt bzw. dass dI/dt zu groß wird, was zu einer Überbelastung des Schalters führen könnte. Ein zu hoher Wert dI/dt könnte auch zu leitungsgebundenen Störungen führen, die sich auf ein Versorgungsnetz auswirken können, an das das Energieversorgungssystem angeschlossen ist.

Gemäß einem weiteren Aspekt der Erfindung wird ein Verfahren zum Laden eines Energieversorgungssystems mit einer Wechselspannung vorgeschlagen, wobei das Energieversorgungssystem eine Vielzahl von Batteriemodulen aufweist, wobei jedes Batteriemodul einen ersten elektrischen Anschluss und einen zweiten elektrischen Anschluss aufweist, über welche die Batteriemodule in einem Verschaltungszweig des Energieversorgungssystems in Serie angeordnet sind, wobei jedes Batteriemodul ferner einen Akkumulator aufweist, der über eine Brückenschaltung des Batteriemoduls mit dem ersten elektrischen Anschluss und dem zweiten elektrischen Anschluss verschaltbar ist, und wobei das Energieversorgungssystem einen in Serie zu den Batteriemodulen angeordneten Schalter temporär in einen Sperrzustand versetzt, sodass eine Belastungsspannung in dem Verschaltungszweig eine maximal zulässige Ladespannung nicht überschreitet. Demgemäß wird es vermieden, dass die Batteriemodule mit einer zu hohen Spannung beaufschlagt werden.

Es ist vorteilhaft, wenn bei Durchführung des Verfahrens eine Steuereinheit des Energieversorgungssystems den Schalter in den Sperrzustand versetzt, sobald die Belastungsspannung die maximal zulässige Ladespannung überschreitet. Die Steuereinheit kann die Belastungsspannung erfindungsgemäß mittels eines Spannungsmessgeräts des Energieversorgungssystems überwachen. Das Verfahren kann erfindungsgemäß ferner so durchgeführt werden, dass die Steuereinheit bei dem Ladevorgang den Schalter aus dem Sperrzustand in einen nichtsperrenden Zustand versetzt, sobald der Verschaltungszweig mit einer Spannung beaufschlagt wird, die so groß ist, dass die Belastungsspannung nach Versetzung des Schalters in den nichtsperrenden Zustand geringer ist als die maximal zulässige Ladespannung des Energieversorgungssystems. Wenn die Spannung soweit abfällt, dass die Belastungsspannung nach Versetzung des Schalters in den nichtsperrenden Zustand unterhalb der maximal zulässigen Ladespannung liegen würde, können die Akkumulatoren folglich wieder geladen werden.

Es ist erfindungsgemäß möglich, dass der Schalter vor einem Versetzen in den Sperrzustand stromlos gestellt wird, indem die Brückenschaltungen dazu geeignete Schaltzustände einnehmen. Wie vorangehend beschrieben kann dadurch eine Überbelastung des Schalters vermieden werden. Ferner wird bevorzugt ein Strom, mit dem der Schalter während und unmittelbar nach einem Versetzen des Schalters in einen nichtsperrenden Zustand beaufschlagt wird, kontinuierlich von einem Nullniveau auf ein Betriebsniveau angehoben, indem die Brückenschaltungen dazu geeignete Schaltzustände annehmen. Dies ist vorteilhaft, da hierdurch ein zu schneller Anstieg eines Stroms in dem Energieversorgungssystem vermieden werden kann. Andernfalls könnte es zu Überlastungseffekten und Störungen bei einem angeschlossenen Versorgungsnetz kommen.

Vorteilhafte Varianten der Erfindung sind in den Zeichnungen beispielhaft dargestellt. Dabei zeigt:
- Fig. 1: eine schematische Darstellung eines erfindungsgemäßen Energieversorgungssystems,
- Fig. 2: eine schematische Darstellung eines Batteriemoduls der Batterieanordnung gemäß Fig. 1,
- Fig. 3: eine schematische Darstellung einer Brückenschaltung des Batteriemoduls gemäß Fig. 2,
- Fig. 4: eine schematische Darstellung eines unidirektional sperrenden Schalters,
- Fig. 5: eine schematische Darstellung eines bidirektional sperrenden Schalters,
- Fig. 6: ein Diagramm eines Strom- und eines Spannungsverlaufs über die Zeit bei Durchführung des erfindungsgemäßen Verfahrens und
- Fig. 7: eine schematische Darstellung einer Variante des erfindungsgemäßen Energieversorgungssystems.

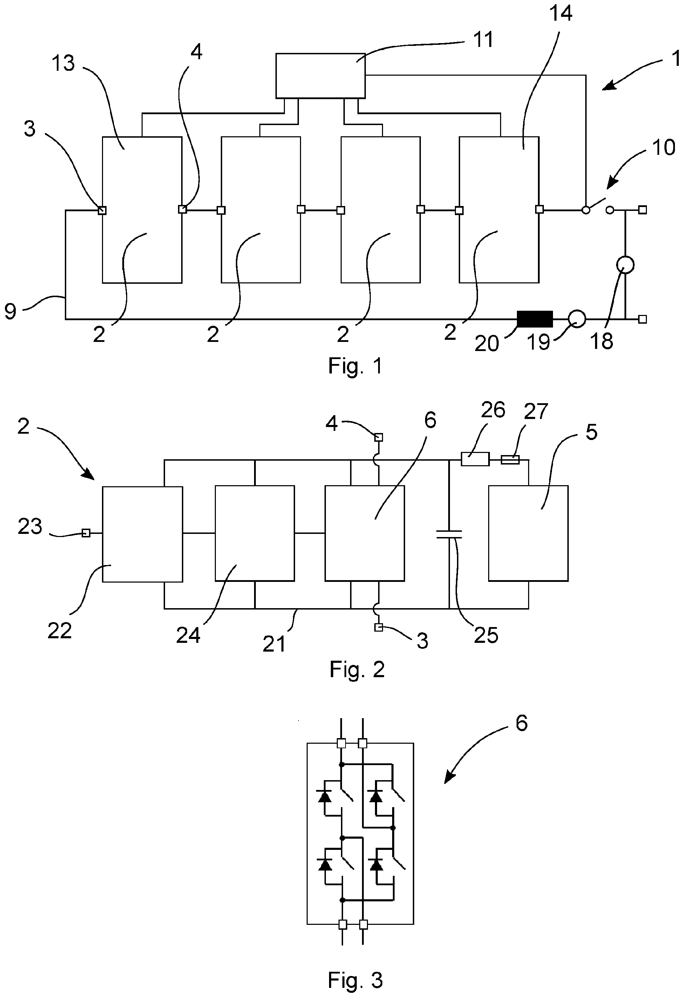

Fig. 1 zeigt eine schematische Darstellung eines erfindungsgemäßen Energieversorgungssystems 1. In dem Energieversorgungssystem 1 sind eine Vielzahl von Batteriemodulen 2 angeordnet. Diese sind in einem Verschaltungszweig 9 in Reihe geschaltet. Ein erstes Batteriemodul 13 und ein letztes Batteriemodul 14 werden hier gesondert gekennzeichnet. Jedes Batteriemodul 2 weist einen ersten elektrischen Anschluss 3 sowie einen zweiten elektrischen Anschluss 4 auf, über welche das jeweilige Batteriemodul 2 an dem Verschaltungszweig 9 angeschlossen ist. Eine Steuereinheit 11 steuert die Batteriemodule 2 bei einem Entladevorgang in geeigneter Weise an, sodass deren Spannungen in Summe eine annähernd sinusförmige Wechselspannung ergeben. Bei einem Ladevorgang steuert die Steuereinheit 11 die Batteriemodule 2 so an, dass Akkumulatoren der Batteriemodule 2 stets mit einer Spannung einer korrekten Polarität beschaltet sind und somit aufgeladen werden können.

In dem Verschaltungszweig 9 sind eine Spule 20, ein Spannungsmessgerät 18 und ein Strommessgerät 19 angeordnet. Ferner ist in dem Verschaltungszweig 9 ein Schalter 10 angeordnet, der dem letzten Batteriemodul 14 eingangsseitig vorgeschaltet ist. Das Spannungsmessgerät 18 ist wiederum dem Schalter 10 eingangsseitig vorgeschaltet. Die Steuereinheit 11 versetzt den Schalter 10 in einen Sperrzustand, sobald eine mit Hilfe des Spannungsmessgeräts 18 ermittelte Belastungsspannung eine maximal zulässige Ladespannung überschreitet. Somit wird vermieden, dass die Batteriemodule 2 mit einer unzulässig hohen Spannung beaufschlagt werden, welche die Batteriemodule 2 beschädigen könnte.

Fig. 2 zeigt eine schematische Darstellung eines der Batteriemodule 2 des Energieversorgungssystems gemäß Fig. 1. Das Batteriemodul 2 weist einen Akkumulator 5 auf, der elektrisch aufgeladen und entladen werden kann. Das Batteriemodul 2 weist ferner eine Brückenschaltung 6 auf, die mit dem ersten elektrischen Anschluss 3 und dem zweiten elektrischen Anschluss 4 des Batteriemoduls 2 verbunden ist. Die Brückenschaltung 6 kann unterschiedliche Schaltzustände annehmen. So kann sie zum Beispiel eine Polarität, mit der der erste elektrische Anschluss 3 und der zweite elektrische Anschluss 4 mit einem Innenzweig 21 des Batteriemoduls 2 verschaltet sind, verändern. Die Brückenschaltung 6 kann ferner den Innenzweig 21 überbrücken. Durch eine geeignete Änderung der Schaltzustände kann eine Vielzahl von in Reihe angeordneten Batteriemodulen 2 somit eine Wechselspannung bereitstellen. Ferner ist es möglich, den Akkumulator 5 aufzuladen. Das Batteriemodul 2 weist außerdem eine Isolationsvorrichtung 22 auf. Diese trennt ein Inneres des Batteriemoduls 2 galvanisch von einem Steueranschluss 23 des Batteriemoduls 2 und enthält zu diesem Zweck einen Optokoppler.

Eine Brückensteuerung 24 erhält ein von der Steuereinrichtung generiertes Signal, das einen gewünschten Schaltzustand angibt. Dieses Signal wird der Brückensteuerung 24 ausgehend von dem Steueranschluss 23 über die Isolationsvorrichtung 22 zugeführt. In Abhängigkeit von dem Signal steuert die Brückensteuerung 24 die Brückenschaltung 6 so an, dass sich der durch das Signal vorgegebene Schaltzustand einstellt. In dem Innenzweig 21 ist ein Kondensator 25 angeordnet. Eine Trennvorrichtung 26 in dem Innenzweig 21 erlaubt es, bei Bedarf den Akkumulator 5 von dem Innenzweig 21 zu trennen. Ferner ist eine Sicherung 27 in dem Innenzweig 21 angeordnet, die bei einem Überstrom eine Trennung des Akkumulators 5 von dem Innenzweig 21 bewirkt.

Fig. 3 zeigt eine schematische Darstellung der Brückenschaltung 6 des Batteriemoduls gemäß Fig. 2. Dabei handelt es sich um eine Vollbrücke, es sind somit unterschiedlichste Schaltzustände möglich. Gemäß anderen Ausführungsformen der Erfindung kann zum Beispiel aber auch eine Halbbrücke zum Einsatz kommen.

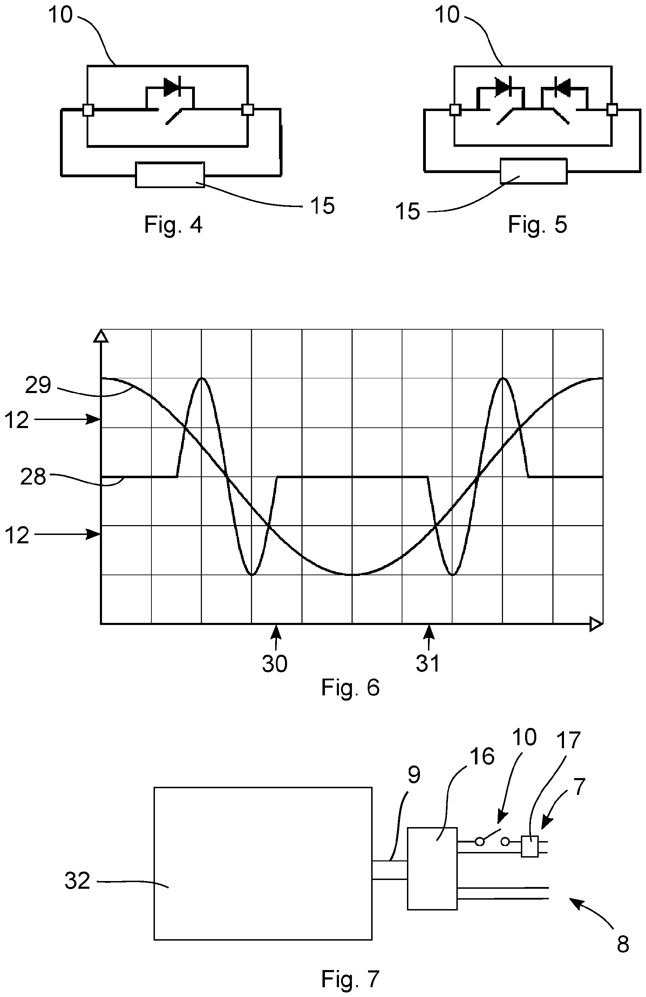

Fig. 4 zeigt eine schematische Darstellung eines unidirektional sperrenden Schalters 10. Dieser erlaubt in einem Sperrzustand weiterhin einen Stromfluss in einer Richtung. Der Schalter 10 wird durch einen MOSFET gebildet, der ein Diodenverhalten aufweist. Ein Widerstand 15 ist parallel zu dem Schalter 10 geschaltet. Der Widerstand 15 dient dazu, eine Überspannung an dem Schalter 10 zu vermeiden, wenn der Schalter 10 von einem nichtsperrenden Zustand in einen Sperrzustand versetzt wird.

Fig. 5 zeigt eine schematische Darstellung eines bidirektional sperrenden Schalters 10. Dieser lässt in einem Sperrzustand in keine Richtung einen Stromfluss zu. Der Schalter 10 wird durch zwei in Reihe angeordnete MOSFETs gebildet, bei denen sich aber die Ausrichtung von Drain und Source unterscheidet. Ein Widerstand 15 ist parallel zu dem Schalter 10 geschaltet. Der Widerstand 15 dient dazu, eine Überspannung an dem Schalter 10 zu vermeiden, wenn der Schalter 10 von einem nichtsperrenden Zustand in einen Sperrzustand versetzt wird.

Fig. 6 zeigt ein Diagramm eines Strom- und eines Spannungsverlaufs über die Zeit bei Durchführung des erfindungsgemäßen Verfahrens. Eine Stromkurve 28 und eine Spannungskurve 29 geben einen Verlauf eines Stroms und einer Spannung über die Zeit wieder. Eine der Spannungskurve 29 zugrundeliegende Spannung wird durch ein Spannungsmessgerät in dem Verschaltungskreis gemessen, das eine Spannung über den Schalter sowie die Batteriemodule misst. Diese Spannung entspricht näherungsweise der Belastungsspannung, wenn sich der Schalter des Energieversorgungssystems in einem nichtsperrenden Zustand befindet. Wenn sich der Schalter in einem sperrenden Zustand befindet, dann weist die Belastungsspannung idealerweise einen Wert von 0 V auf und die Spannungskurve 29 gibt lediglich denjenigen Spannungswert wieder, welchen die Belastungsspannung annehmen würde, falls der Schalter unmittelbar in den nichtsperrenden Zustand versetzt werden sollte.

Das Energieversorgungssystem ist an ein Versorgungsnetz angeschlossen, das das Energieversorgungssystem mit einer sinusförmigen Wechselspannung gemäß der Spannungskurve 29 versorgt. Die Stromkurve 28 beschreibt einen Strom in dem Verschaltungszweig der Energieversorgungseinrichtung. Die Spannungskurve 29 weist allerdings Scheitelwerte auf, die über eine maximal zulässige Ladespannung 12 hinausgehen, mit der die Batteriemodule des Energieversorgungssystems beaufschlagt werden dürfen. Das Energieversorgungssystem stellt deshalb sicher, dass die Belastungsspannung begrenzt wird. Dazu wird die Belastungsspannung in dem Verschaltungszweig laufend gemessen. Zu einem ersten Zeitpunkt 30 überschreitet die Belastungsspannung die maximal zulässige Ladespannung 12. Der Schalter des Energieversorgungssystems wird in einen Sperrzustand versetzt und ein Stromfluss gemäß der Stromkurve 28 setzt aus. Eine Überbeanspruchung der Batteriemodule wird vermieden. Zu einem zweiten Zeitpunkt unterschreitet die Spannungskurve 29 hingegen die maximal zulässige Ladespannung, sodass der Schalter in einen nichtsperrenden Zustand versetzt wird. Es kann nun wieder ein Strom fließen und die Batteriemodule des Energieversorgungssystems können weiter geladen werden. Der beschriebene Vorgang wiederholt sich zyklisch.

Fig. 7 zeigt eine schematische Darstellung einer Variante des erfindungsgemäßen Energieversorgungssystems 1. In einem Verschaltungszweig 9 des Energieversorgungssystems 1 angeordnete Bauteile sind abstrahiert durch einen Modulblock 32 dargestellt. Der darin enthaltene Aufbau ähnelt dem aus Fig. 1, wobei der Schalter 10 des Energieversorgungssystems 1 jedoch nicht in dem Modulblock 32 enthalten ist. Das Energieversorgungssystem 1 weist ein Schaltmittel 16 auf, an das der Verschaltungszweig 9 angeschlossen ist. Das Energieversorgungssystem 1 weist ferner einen Ladepfad 7 und einen Entladepfad 8 auf, die an das Schaltmittel 16 angeschlossen sind und zwischen denen das Schaltmittel 16 umschalten kann. Das Schaltmittel 16 weist mehrere Relais auf, mittels denen es zwischen dem Ladepfad 7 und dem Entladepfad 8 umschalten kann. Der Schalter 10 ist in dem Ladepfad 7 angeordnet. Dieser Aufbau erlaubt es, wahlweise Batteriemodule des Energieversorgungssystems über den Ladepfad 7 zu laden oder über den Entladepfad 8 zu entladen, sodass einem angeschlossenen Verbraucher elektrische Energie bereitgestellt werden kann. In dem Ladepfad 7 ist ferner eine Gleichrichterbrücke 17 angeordnet, die sicherstellt, dass ein Strom nur in einer Richtung in den Schalter 10 hineinfließen kann.

### Bezugszeichenliste

1. Energieversorgungssystem
2. Batteriemodul
3. Erster elektrischer Anschluss
4. Zweiter elektrischer Anschluss
5. Akkumulator
6. Brückenschaltung
7. Ladepfad
8. Entladepfad
9. Verschaltungszweig
10. Schalter
11. Steuereinheit
12. Maximal zulässige Ladespannung
13. Erstes Batteriemodul
14. Letztes Batteriemodul
15. Widerstand
16. Schaltmittel
17. Gleichrichterbrücke
18. Spannungsmessgerät
19. Strommessgerät
20. Spule
21. Innenzweig
22. Isolationsvorrichtung
23. Steueranschluss
24. Brückensteuerung
25. Kondensator
26. Trennvorrichtung
27. Sicherung
28. Stromkurve
29. Spannungskurve
30. Erster Zeitpunkt
31. Zweiter Zeitpunkt
32. Modulblock

## Patentansprüche

1. Energieversorgungssystem (1)
mit einer Vielzahl von Batteriemodulen (2), wobei jedes Batteriemodul (2) einen ersten elektrischen Anschluss (3) und einen zweiten elektrischen Anschluss (4) aufweist, über welche die Batteriemodule (2) in einem Verschaltungszweig (9) des Energieversorgungssystems (1) in Serie angeordnet sind,
wobei jedes Batteriemodul (2) ferner einen Akkumulator (5) aufweist, der über eine Brückenschaltung (6) des Batteriemoduls (2) mit dem ersten elektrischen Anschluss (3) und dem zweiten elektrischen Anschluss (4) verschaltbar ist, wobei die Brückenschaltung (6) dazu ausgebildet ist, den Ackumulator (5) mit unterschiedlicher Polarität mit dem ersten und dem zweiten Anschluss (3, 4) zu verschalten oder den ersten elektrischen Anschluss (3) und den zweiten elektrischen Anschluss (4) miteinander zu verschalten,
wobei das Energieversorgungssystem (1) einen zu den Batteriemodulen (2) in Serie angeordneten Schalter (10) aufweist, der temporär in einen Sperrzustand versetzt werden kann, sodass bei einem Ladevorgang des Energieversorgungssystems (1) mit einer Wechselspannung durch eine externe Energiequelle eine Belastungsspannung in dem Verschaltungszweig (9) eine maximal zulässige Ladespannung (12) nicht überschreitet, und
wobei die Belastungsspannung eine an den Batteriemodulen (2) in dem Verschaltungszweig (9) anliegende Spannung oder ein Betrag der an den Batteriemodulen (2) in dem Verschaltungszweig (9) anliegenden Spannung ist.

2. Energieversorgungssystem (1) nach Anspruch 1, **dadurch gekennzeichnet, dass** das Energieversorgungssystem (1) eine Steuereinheit (11) aufweist, die dazu eingerichtet ist, den Schalter (10) in den Sperrzustand zu versetzen, sobald die Belastungsspannung die maximal zulässige Ladespannung (12) überschreitet.

3. Energieversorgungssystem (1) nach Anspruch 2, **dadurch gekennzeichnet, dass** die Steuereinheit (11) dazu eingerichtet ist, bei dem Ladevorgang den Schalter (10) aus dem Sperrzustand in einen nichtsperrenden Zustand zu versetzen, sobald der Verschaltungszweig (9) mit einer Spannung beaufschlagt wird, die so groß ist, dass die Belastungsspannung nach Versetzung des Schalters (10) in den nichtsperrenden Zustand geringer ist als die maximal zulässige Ladespannung (12) des Energieversorgungssystems (1).

4. Energieversorgungssystem (1) nach einem der vorhergehenden Ansprüche, **dadurch gekennzeichnet, dass** der Schalter (10) so ausgelegt ist, dass er mindestens eine Spannung in Höhe einer Differenz zwischen einer erwarteten maximalen Spannung in dem Verschaltungszweig (9) und einer minimalen maximal zulässigen Ladespannung sperren kann oder dass er mindestens eine erwartete maximale Belastungsspannung in dem Verschaltungszweig (9) sperren kann.

5. Energieversorgungssystem (1) nach einem der vorhergehenden Ansprüche, **dadurch gekennzeichnet, dass** das Energieversorgungssystem ein zu dem Schalter (10) eingangsseitig angeordnetes Spannungsmessgerät (18) zur Messung der Belastungsspannung aufweist.

6. Energieversorgungssystem (1) nach einem der vorhergehenden Ansprüche, **dadurch gekennzeichnet, dass** das Energieversorgungssystem (1) eine zu dem Schalter (10) eingangsseitig angeordnete Gleichrichterbrücke (17) aufweist.

7. Energieversorgungssystem (1) nach einem der vorhergehenden Ansprüche, **dadurch gekennzeichnet, dass** der Schalter (10) ein Transistor, ein TRIAC oder ein SCR ist.

8. Energieversorgungssystem (1) nach einem der vorhergehenden Ansprüche, **dadurch gekennzeichnet, dass** der Schalter (10) in dem Verschaltungszweig (9) vor einem ersten Batteriemodul (13) der Batteriemodule (2) oder hinter einem letzten Batteriemodul (14) der Batteriemodule (2) angeordnet ist.

9. Energieversorgungssystem (1) nach einem der vorhergehenden Ansprüche, **dadurch gekennzeichnet, dass** das Energieversorgungssystem (1) dazu eingerichtet ist, elektrische Energie, die durch die externe Energiequelle dem Energieversorgungssystem (1) bereitgestellt wird, auf Vorhandensein mindestens eines Fehlercharakteristikums zu prüfen, und sich bei Detektion des Fehlercharakteristikums abzuschalten, wobei das Fehlercharakteristikum vorzugsweise ausgewählt ist aus der Gruppe umfassend ein Vorhandensein eines Überstroms, ein Vorhandensein einer Überspannung, ein Vorhandensein einer Unterspannung, eine Unterbrechung einer Verbindung zu einer externen Energiequelle aufgrund eines Abzugs eines Steckers, ein Überschreiten einer Anstiegsgeschwindigkeit einer Spannung, ein Überschreiten einer Abfallgeschwindigkeit einer Spannung und ein Über- oder ein Unterschreiten einer Spannungsfrequenz.

10. Energieversorgungssystem (1) nach einem der vorhergehenden Ansprüche, **dadurch gekennzeichnet, dass** das Energieversorgungsystem (1) ein Schaltmittel (16) aufweist, an das der Verschaltungszweig (9) angeschlossen ist, wobei das Energieversorgungssystem (1) ferner einen Ladepfad (7) und einen Entladepfad (8) aufweist, die an das Schaltmittel (16) angeschlossen sind und zwischen denen das Schaltmittel (16) umschalten kann, und wobei der Schalter (10) in dem Ladepfad (7) angeordnet ist.

11. Energieversorgungssystem (1) nach einem der vorhergehenden Ansprüche, **dadurch gekennzeichnet, dass** das Energieversorgungssystem (1) dazu eingerichtet ist, den Schalter (10) vor einem Versetzen in den Sperrzustand stromlos zu stellen, indem die Brückenschaltungen (6) dazu geeignete Schaltzustände einnehmen.

12. Energieversorgungssystem (1) nach einem der der vorhergehenden Ansprüche, **dadurch gekennzeichnet, dass** das Energieversorgungssystem (1) dazu eingerichtet ist, einen Strom, mit dem der Schalter (10) während und unmittelbar nach einem Versetzen des Schalters (10) in einen nichtsperrenden Zustand beaufschlagt wird, kontinuierlich von einem Nullniveau auf ein Betriebsniveau anzuheben, indem die Brückenschaltungen (6) dazu geeignete Schaltzustände annehmen.

13. Verfahren zum Laden eines Energieversorgungssystems (1) mit einer Wechselspannung,
wobei das Energieversorgungssystem (1) eine Vielzahl von Batteriemodulen (2) aufweist,
wobei jedes Batteriemodul (2) einen ersten elektrischen Anschluss (3) und einen zweiten elektrischen Anschluss (4) aufweist, über welche die Batteriemodule (2) in einem Verschaltungszweig (9) des Energieversorgungssystems (1) in Serie angeordnet sind,
wobei jedes Batteriemodul (2) ferner einen Akkumulator (5) aufweist, der über eine Brückenschaltung (6) des Batteriemoduls (2) mit dem ersten elektrischen Anschluss (3) und dem zweiten elektrischen Anschluss (4) verschaltbar ist, wobei die Brückenschaltung (6) dazu ausgebildet ist, den Ackumulator (5) mit unterschiedlicher Polarität mit dem ersten und dem zweiten Anschluss (3, 4) zu verschalten oder den ersten elektrischen Anschluss (3) und den zweiten elektrischen Anschluss (4) miteinander zu verschalten,
wobei das Energieversorgungssystem (1) bei dem Ladevorgang einen in Serie zu den Batteriemodulen (2) angeordneten Schalter (10) temporär in einen Sperrzustand versetzt, sodass eine Belastungsspannung in dem Verschaltungszweig (9) eine maximal zulässige Ladespannung (12) nicht überschreitet, und
wobei die Belastungsspannung eine an den Batteriemodulen (2) in dem Verschaltungszweig (9) anliegende Spannung oder ein Betrag der an den Batteriemodulen (2) in dem Verschaltungszweig (9) anliegenden Spannung ist.

14. Verfahren nach Anspruch 13, **dadurch gekennzeichnet, dass** eine Steuereinheit (11) des Energieversorgungssystems (1) den Schalter (10) in den Sperrzustand versetzt, sobald die Belastungsspannung die maximal zulässige Ladespannung (12) überschreitet.

15. Verfahren nach Anspruch 14, **dadurch gekennzeichnet, dass** die Steuereinheit (11) bei dem Ladevorgang den Schalter (10) aus dem Sperrzustand in einen nichtsperrenden Zustand versetzt, sobald der Verschaltungszweig (9) mit einer Spannung beaufschlagt wird, die so groß ist, dass die Belastungsspannung nach Versetzung des Schalters (10) in den nichtsperrenden Zustand geringer ist als die maximal zulässige Ladespannung (12) des Energieversorgungssystems (1).

## Claims

1. Power supply system (1) with a multiplicity of battery modules (2), wherein each battery module (2) has a first electrical terminal (3) and a second electrical terminal (4), by way of which the battery modules (2) are arranged in series in a circuit branch (9) of the power supply system (1), wherein
each battery module (2) further comprises an accumulator (5) which can be connected to the first electrical terminal (3) and the second electrical terminal (4), by way of a bridge circuit (6) of the battery module (2), wherein the bridge circuit (6) is designed to connect the accumulator (5) with different polarity with the first and the second electrical terminal (3, 4) or to connect the first electrical terminal (3) and the second electrical terminal (4) to each other, wherein
the power supply system (1) has a switch (10), which is arranged in series with the battery modules (2), and can be temporarily moved into a blocking state so that, during a charging process of the power supply system (1) with an AC voltage from an external energy source, a load voltage in the circuit branch (9) does not exceed a maximum permissible charging voltage (12) and that the load voltage is a voltage applied to the battery modules (2) in the circuit branch (9), or a proportion of the voltage applied to the battery modules (2) in the circuit branch (9).

2. Power supply system (1) according to Claim 1, **characterised in that**, the power supply system (1) has a control unit (11) which is set up to put the switch (10) into the blocking state as soon as the load voltage exceeds the maximum permissible charging voltage (12).

3. Power supply system (1) according to Claim 2, **characterised in that**, the control unit (11) is set up to move the switch (10) from the blocking state to a non-blocking state during the charging process as soon as a voltage is applied to the circuit branch (9), which is of a level such that the load voltage after moving the switch (10) into the non-blocking state is lower than the maximum permissible charging voltage (12) of the power supply system (1).

4. Power supply system (1) according to one of the preceding claims **characterised in that**, the switch (10) is designed to block at least a voltage equal to a difference between an anticipated maximum voltage in the circuit branch (9) and a minimum maximum permissible charging voltage or that the switch (10) is designed to block at least one anticipated maximum load voltage in the circuit branch (9).

5. Power supply system (1) according to one of the preceding claims, **characterised in that**, the power supply system has a voltage measuring device (18) arranged on the input side of the switch (10) for measuring the load voltage.

6. Power supply system (1) according to one of the preceding claims, **characterised in that**, the power supply system (1) has a rectifier bridge (17) arranged on the input side of the switch (10).

7. Power supply system (1) according to one of the preceding claims, **characterised in that**, the switch (10) is a transistor, a TRIAC or an SCR.

8. Power supply system (1) according to one of the preceding claims, **characterised in that**, the switch (10) is arranged in the circuit branch (9) in front of a first battery module (13) of the battery modules (2), or behind a last battery module (14) of the battery modules (2).

9. Power supply system (1) according to one of the preceding claims, **characterised in that**, the power supply system (1) is arranged to check electrical power provided by the external power source to the power supply system (1) for the presence of at least one fault characteristic, and to switch off upon detection of the fault characteristic, wherein the fault characteristic is preferably selected from the group comprising a presence of an overcurrent, a presence of an overvoltage, a presence of an undervoltage, an interruption of a connection to an external power source due to a disconnection of a plug, an exceedance of a slew rate of a voltage, an exceedance of a fall rate of a voltage, and an exceedance of, or a falling below, a voltage frequency.

10. Power supply system (1) according to one of the preceding claims, **characterised in that**, the power supply system (1) has a switching means (16) to which the circuit branch (9) is connected, wherein the power supply system (1) furthermore comprises a charging path (7) and a discharging path (8), which are connected to the switching means (16), and between which the switching means (16) can switch, and wherein the switch (10) is arranged in the charging path (7).

11. Power supply system (1) according to one of the preceding claims, **characterised in that**, the power supply system (1) is set up to de-energise the switch (10) before it is placed in the blocking state by the bridge circuits (6) assuming switching states suitable for this purpose.

12. Power supply system (1) according to one of the preceding claims, **characterised in that**, the power supply system (1) is adapted to raise continuously a current applied to the switch (10) from a zero level to an operating level during, and immediately after placing the switch (10) in a non-blocking state by the bridge circuits (6) assuming switching states suitable for this purpose.

13. Method for charging a power supply system (1) with an AC voltage, wherein
the power supply system (1) comprises a multiplicity of battery modules (2), wherein
each battery module (2) has a first electrical terminal (3) and a second electrical terminal (4), by way of which the battery modules (2) are arranged in series in a circuit branch (9) of the power supply system (1), wherein
each battery module (2) further comprises an accumulator (5) which can be connected to the first electrical terminal (3) and the second electrical terminal (4) by way of a bridge circuit (6) of the battery module (2), wherein the bridge circuit (6) is designed to connect the accumulator (5) with different polarity with the first and the second electrical terminal (3, 4) or to connect the first electrical terminal (3) and the second electrical terminal (4) to each other, wherein
the power supply system (1) temporarily puts a switch (10) arranged in series with the battery modules (2) into a blocking state during the charging process, so that a load voltage in the circuit branch (9) does not exceed a maximum permissible charging voltage (12), and wherein
the load voltage is a voltage applied to the battery modules (2) in the circuit branch (9), or a proportion of the voltage applied to the battery modules (2) in the circuit branch (9).

14. Method according to Claim 13, **characterised in that**, a control unit (11) of the power supply system (1) sets the switch (10) to the blocking state as soon as the load voltage exceeds the maximum permissible charging voltage (12).

15. Method according to Claim 14, **characterised in that**, the control unit (11) shifts the switch (10) from the blocking state to a non-blocking state during the charging process as soon as a voltage is applied to the circuit branch (9) which is so high that the load voltage after moving the switch (10) to the non-blocking state is lower than the maximum permissible charging voltage (12) of the power supply system (1).

## Revendications

1. Système d'alimentation en énergie (1)
comprenant une pluralité de modules de batterie (2), dans lequel chaque module de batterie (2) comprend une première borne électrique (3) et une deuxième borne électrique (4) par l'intermédiaire desquelles les modules de batterie (2) sont disposés en série dans une branche de circuit (9) du système d'alimentation en énergie (1),
dans lequel chaque module de batterie (2) comprend en outre un accumulateur (5) qui peut être connecté à la première borne électrique (3) et à la deuxième borne électrique (4) via un circuit en pont (6) du module de batterie (2), dans lequel le circuit en pont (6) est conçu pour connecter l'accumulateur (5) avec une polarité différente aux première et deuxième bornes (3, 4) ou pour connecter la première borne électrique (3) et la deuxième borne électrique (4) l'une à l'autre,
dans lequel le système d'alimentation en énergie (1) comprend un commutateur (10) qui est disposé en série avec les modules de batterie (2) et qui peut être mis temporairement dans un état de blocage de sorte que, pendant une opération de charge du système d'alimentation en énergie (1) avec une tension alternative par une source d'énergie externe, une tension de contrainte dans la branche de circuit (9) ne dépasse pas une tension de charge admissible au maximum (12), et
dans lequel la tension de contrainte est une tension appliquée aux modules de batterie (2) dans la branche de circuit (9) ou une quantité de la tension appliquée aux modules de batterie (2) dans la branche de circuit (9).

2. Système d'alimentation en énergie (1) selon la revendication 1, **caractérisé par le fait que** le système d'alimentation en énergie (1) comprend une unité de commande (11) qui est conçue pour mettre le commutateur (10) dans l'état de blocage dès que la tension de contrainte dépasse la tension de charge admissible au maximum (12).

3. Système d'alimentation en énergie (1) selon la revendication 2, **caractérisé par le fait que** l'unité de commande (11) est conçue pour faire passer le commutateur (10) de l'état de blocage à un état non bloquant pendant l'opération de charge, dès qu'une tension est appliquée à la branche de circuit (9), qui est si élevée que, après que le commutateur (10) a été mis dans l'état non bloquant, la tension de contrainte est inférieure à la tension de charge admissible au maximum (12) du système d'alimentation en énergie (1).

4. Système d'alimentation en énergie (1) selon l'une quelconque des revendications précédentes, **caractérisé par le fait que** le commutateur (10) est conçu de telle sorte qu'il peut bloquer au moins une tension égale à une différence entre une tension maximale attendue dans la branche de circuit (9) et une tension de charge minimale admissible au maximum ou qu'il peut bloquer au moins une tension de contrainte maximale attendue dans la branche de circuit (9).

5. Système d'alimentation en énergie (1) selon l'une quelconque des revendications précédentes, **caractérisé par le fait que** le système d'alimentation en énergie comprend un dispositif de mesure de tension (18) qui est disposé du côté entrée par rapport au commutateur (10) et est destiné à mesurer la tension de contrainte.

6. Système d'alimentation en énergie (1) selon l'une quelconque des revendications précédentes, **caractérisé par le fait que** le système d'alimentation en énergie (1) comprend un pont redresseur (17) qui est disposé du côté entrée par rapport au commutateur (10).

7. Système d'alimentation en énergie (1) selon l'une quelconque des revendications précédentes, **caractérisé par le fait que** le commutateur (10) est un transistor, un TRIAC ou un SCR.

8. Système d'alimentation en énergie (1) selon l'une quelconque des revendications précédentes, **caractérisé par le fait que** le commutateur (10) dans la branche de circuit (9) est disposé devant un premier module de batterie (13) des modules de batterie (2) ou derrière un dernier module de batterie (14) des modules de batterie (2).

9. Système d'alimentation en énergie (1) selon l'une quelconque des revendications précédentes, **caractérisé par le fait que** le système d'alimentation en énergie (1) est conçu pour vérifier de l'énergie électrique qui est fournie par la source d'énergie externe au système d'alimentation en énergie (1), quant à la présence d'au moins une caractéristique d'erreur, et pour s'éteindre lors de la détection de la caractéristique d'erreur, dans lequel la caractéristique d'erreur est de préférence choisie dans le groupe comprenant une présence d'une surintensité, une présence d'une surtension, une présence d'une sous-tension, une interruption d'une connexion à une source d'énergie externe en raison d'un débranchement de la prise, un dépassement d'un taux de montée en tension, un dépassement d'un taux de chute de tension et un dépassement ou une chute en dessous d'une fréquence de tension.

10. Système d'alimentation en énergie (1) selon l'une quelconque des revendications précédentes, **caractérisé par le fait que** le système d'alimentation en énergie (1) comprend un moyen de commutation (16) auquel est connectée la branche de circuit (9), dans lequel le système d'alimentation en énergie (1) comprend en outre un chemin de charge (7) et un chemin de décharge (8) qui sont connectés au moyen de commutation (16) et entre lesquels le moyen de commutation (16) peut commuter, et dans lequel le commutateur (10) est disposé dans le chemin de charge (7).

11. Système d'alimentation en énergie (1) selon l'une quelconque des revendications précédentes, **caractérisé par le fait que** le système d'alimentation en énergie (1) est conçu pour mettre hors tension le commutateur (10) avant de le mettre dans l'état de blocage, **par le fait que** les circuits en pont (6) prennent des états de commutation y appropriés.

12. Système d'alimentation en énergie (1) selon l'une quelconque des revendications précédentes, **caractérisé par le fait que** le système d'alimentation en énergie (1) est conçu pour faire passer un courant qui est appliqué au commutateur (10) pendant et immédiatement après que le commutateur (10) est/a été mis dans un état non bloquant, de manière continue d'un niveau zéro à un niveau de fonctionnement **par le fait que** les circuits en pont (6) prennent des états de commutation y appropriés.

13. Procédé de charge d'un système d'alimentation (1) avec une tension alternative,
dans lequel le système d'alimentation en énergie (1) comprend une pluralité de modules de batterie (2),
dans lequel chaque module de batterie (2) comprend une première borne électrique (3) et une deuxième borne électrique (4) par l'intermédiaire desquelles les modules de batterie (2) sont disposés en série dans une branche de circuit (9) du système d'alimentation en énergie (1),
dans lequel chaque module de batterie (2) comprend en outre un accumulateur (5) qui peut être connecté à la première borne électrique (3) et à la deuxième borne électrique (4) via un circuit en pont (6) du module de batterie (2), dans lequel le circuit en pont (6) est conçu pour connecter l'accumulateur (5) avec une polarité différente aux première et deuxième bornes (3, 4) ou pour connecter la première borne électrique (3) et la deuxième borne électrique (4) l'une à l'autre,
dans lequel, pendant l'opération de charge, le système d'alimentation en énergie (1) met temporairement un commutateur (10) disposé en série avec les modules de batterie (2) dans un état de blocage de sorte qu'une tension de contrainte dans la branche de circuit (9) ne dépasse pas une tension de charge admissible au maximum (12), et
dans lequel la tension de contrainte est une tension appliquée aux modules de batterie (2) dans la branche de circuit (9) ou une quantité de la tension appliquée aux modules de batterie (2) dans la branche de circuit (9).

14. Procédé selon la revendication 13, **caractérisé par le fait qu'**une unité de commande (11) du système d'alimentation en énergie (1) met le commutateur (10) dans l'état de blocage dès que la tension de contrainte dépasse la tension de charge admissible au maximum (12).

15. Procédé selon la revendication 14, **caractérisé par le fait que** l'unité de commande (11) fait passer le commutateur (10) de l'état de blocage à un état non bloquant pendant l'opération de charge, dès qu'une tension est appliquée à la branche de circuit (9), qui est si élevée que, après que le commutateur (10) a été mis dans l'état non bloquant, la tension de contrainte est inférieure à la tension de charge admissible au maximum (12) du système d'alimentation en énergie (1).
